# EUROPEAN PATENT SPECIFICATION

(11) **EP 2 870 577 B1**
(45) Date of publication and mention of the grant of the patent: **14.07.2021**
(21) Application number: 13714302.0
(22) Date of filing: 05.04.2013
(51) Int. Cl.: G06Q 30/02, G06Q 30/00, H04M 15/00, H04L 12/14

(54) **CONDITIONAL POLICY CONTROL**
BEDINGTE RICHTLINIENKONTROLLE
CONTRÔLE DE POLITIQUE CONDITIONNELLE

(30) Priority: 11.04.2012 WO PCT/EP2012/056524
(43) Date of publication of application: 13.05.2015
(73) Proprietor: Nokia Solutions and Networks Oy, 02610 Espoo (FI)
(72) Inventor: RASANEN, Juha, Antero, FI-02660 Espoo (FI)
(74) Representative: TBK
(86) International application number: PCT/EP2013/057191
(87) International publication number: WO 2013/152997

(56) References cited:
- US-A1- 2009 182 883
- US-A1- 2009 254 494
- "3rd Generation Partnership Project; Technical Specification Group Services and System Aspects; Policy and charging control architecture (Release 11)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.3.0, 21 September 2011 (2011-09-21), pages 1-167, XP050553787,

## Description

### Field of the invention

The present invention relates to an apparatus, a method, a system, and a computer program product related to policy and/or charging control. More particularly, the present invention relates to an apparatus, a method, a system, and a computer program product for policy and/or charging control under globally defined conditions.

### Background of the invention

### Abbreviations

- 3GPP: 3^{rd} generation partnership project
- GW: Gateway
- IMS: IP multimedia subsystem
- IP: Internet protocol
- IP-CAN: IP connectivity access network
- OCS: Online charging system
- PCC: Policy and charging control
- PCEF: Policy and charging enforcement function
- PCRF: Policy and charging rules function
- P-GW: Packet data network gateway
- QoS: Quality of service
- Rel: Release
- SPR: Subscription profile repository
- TS: Technical Specification
- UE: User equipment

Policy / QoS control based on subscriber spending limits is standardized by 3GPP in Rel-11.

As specified in Rel-11, the PCRF subscribes to changes of policy counter statuses (of a given subscriber) by sending a request to OCS. The OCS sends the current statuses of the subscribed counters (of the subscriber) in the reply to the PCRF. The PCRF applies QoS / policies (PCC rules) defined for / corresponding to the statuses of the policy counters. Then after that the OCS notifies PCRF every time a status change exceeding a defined threshold takes place, and the PCRF updates the QoS / policies (PCC rules) for the user session accordingly.

Policy information change based on a change of a general condition, e.g. time of day or some less regular event, causes a need for the OCS to update a number of various policy counters of different users and report the changes over user specific sessions to the PCRF. The PCRF shall update the corresponding PCC rules of different user sessions to the PCEF. Consequently, the change of a general condition causes a flush of message both at the Sy interface (between OCS and PCRF) and at the Gx interface (between PCRF and PCEF). And further, a signalling traffic peak is caused on the user plane to signal the QoS change between the network and all related UEs, overloading both access network interfaces and related access network elements.

The following documents provide background information and requirements referred to in this report:
- 3GPP TS 23.203, version 11.3.0
- 3GPP draft TS 29.219, version 0.1.2
- 3GPP document S2-114202.

The last of these documents proposes a solution for the Sy interface. According to this document, the OCS may provide policy counter status change information to the PCRF in a deferred mode. The OCS may indicate a time at which the status change occurs.
However, this solution may result in problems with regulatory authorities requesting a high (e.g. 200-300 msec) time accuracy of a tariff change. Moreover, the solution does not remove the flush of messages, i.e. the number of required message exchanges, but only alleviates the problem by spreading the peak of messages over a wider period of time.

### Summary of the invention

It is an object of the present invention to improve the prior art.

*The above mentioned objects are achieved by what is defined in the appended independent claims. Advantageous modifications thereof are set forth in the appended dependent claims.*

According to embodiments of the invention, at least the following advantages are achieved:
- An overload of at least some of the network entities and interfaces involved in PCC is avoided;
- Modifications of the relevant rule may be performed in short time, thus regulatory requirements e.g. with respect to tariff switches may be fulfilled;
- The solution may be backward compatible.

It is to be understood that any of the above modifications can be applied singly or in combination to the respective aspects which they refer to, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein
Fig. 1 shows a message flow according to an embodiment of the invention;
Fig. 2 shows another message flow according to an embodiment of the invention;
Fig. 3 shows a further message flow according to an embodiment of the invention;
Fig. 4 shows a still further message flow according to an embodiment of the invention;
Fig. 5 shows an apparatus according to an embodiment of the invention;
Fig. 6 shows a method according to an embodiment of the invention.
Fig. 7 shows an apparatus according to an embodiment of the invention;
Fig. 8 shows a method according to an embodiment of the invention;
Fig. 9 shows an apparatus according to an embodiment of the invention;
Fig. 10 shows a method according to an embodiment of the invention;
Fig. 11 shows an apparatus according to an embodiment of the invention; and
Fig. 12 shows a method according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

According to embodiments of the invention, the OCS does not provide a single status of the subscribed counter as conventionally, but provides a plurality of pairs of status and condition. The conditions indicate when the corresponding status of the respective pair is to be applied. Each of the network entities between the OCS and the UE, i.e. PCRF, PCEF, and access network may either forward a single, selected, rule for this counter as conventionally, or it may forward several pairs of rules and condition, provided that corresponding pairs are received from the previous network entity in the chain from OCS to UE. Furthermore, at least the network entities PCEF, access network, and UE may determine which condition is currently valid and apply the corresponding rule to the counter. This is not required (but not excluded) for the PCRF since it is not involved in policy enforcement.

Note that, for the purpose of the present application, a policy rule may be a rule as provided by the PCRF to the PCEF, but it may also comprise some parameters to be applied to the respective counter, like QoS parameters or charging parameters applied by access network and/or user equipment.

According to some embodiments of the invention, in order to avoid the flush of messages on the Sy interface, instead of indicating only the current status of a given policy counter to the PCRF, the OCS may indicate several status value and condition pairs for the given counter, each status value being valid when the corresponding condition (parameter) is valid/prevailing. The condition may be e.g. time of day or a period of time. Upon recognizing the activation or deactivation of a condition, the PCRF/PCEF may then take relevant policy control actions without any need to exchange (a flush of user session related) messages between the OCS and PCRF.

According to some embodiments of the invention, there may be general conditions or events that cannot be recognized by the PCRF but can be recognized by the OCS. In such a case, the OCS may indicate the change of the condition to the PCRF with a single, general (i.e. non-user-session-specific) message to avoid a flush of user session specific/related messages through the Sy interface.

According to some embodiments of the invention, in order to avoid the flush of messages on the Gx interface, instead of indicating only the current PCC rule(s) to the PCEF, the PCRF indicates several PCC rule and condition pairs (or QoS parameter and condition pairs) for a given user session, each PCC rule (or QoS parameter) being valid when the corresponding condition (parameter) is valid/prevailing. The condition may be e.g. time of day or a period of time. Upon recognizing the activation or deactivation of a condition, the PCEF may then take relevant policy control / enforcement actions without any need to exchange (a flush of user session related) messages between the PCRF and PCEF.

According to some embodiments of the invention, there may be general conditions or events that cannot be recognized by the PCEF but can be recognized by the PCRF, e.g. through an indication from the OCS. In such a case the PCRF can indicate the change of the condition to the PCEF with a single, general (i.e. non-user-session-specific) message to avoid a flush of user session specific/related messages through the Gx interface.

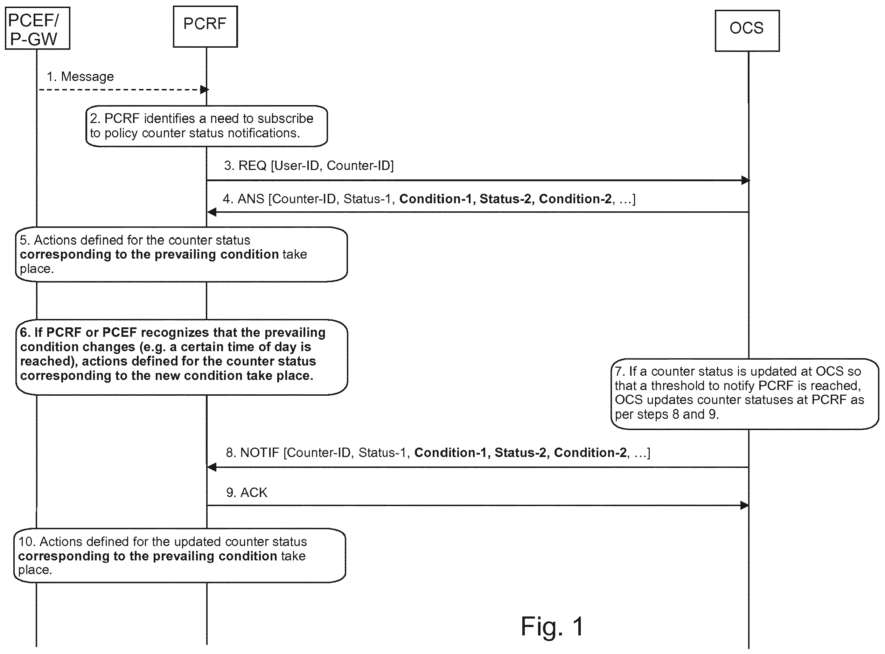

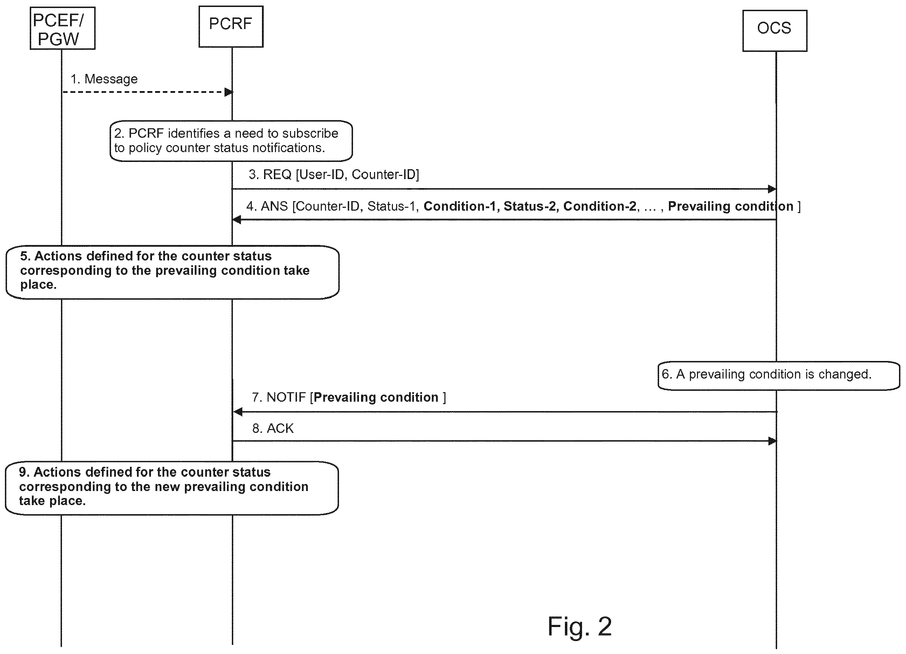

Details of exemplary message flows on the Sy and Gx interfaces according to some embodiments of the invention are shown in Figs. 1 and 2:
When the PCRF identifies a need to subscribe to policy counter status notifications, typically upon an IP-CAN session establishment, the PCRF sends a request message to the OCS. The message contains a User-ID to identify the user and one or more policy counter IDs to identify the policy counters (Steps 2 and 3 in Figures 1 and 2).

In the reply message to the PCRF, the OCS includes (per policy counter) not just the Counter-ID and counter status, but a counter status per defined condition. There may be plural different conditions with different status values for a given policy counter. The condition may be for example a time of day, a defined period of time when the status linked to the condition should be valid, an event of any kind that can be recognized by the PCRF when it occurs (refer to step 4 in Fig 1). The condition may also be an event that is just numbered or named and the activation of which is reported by the OCS to the PCRF, and in this case the reply message may also contain a parameter to indicate which of the conditions is valid / prevailing at the moment (refer to step 4 in Fig 2).

The PCRF, in some embodiments with the PCEF involved, operates according to the counter status of the valid / prevailing condition. In practice that may mean, for example, that the PCC rules corresponding to the counter status of the valid / prevailing condition are activated and/or enforced.

If PCRF or PCEF recognizes, either by itself as in Figure 1 / step 6 or indicated by the OCS as in Figure 2 / steps 6 - 8, that the prevailing condition changes / has changed (e.g. a certain time of day is reached), actions defined for the counter status corresponding to the new condition take place. In practice that may mean, for example, that the PCC rules corresponding to the counter status of the new valid / prevailing condition are activated and/or enforced.

According to some embodiments of the invention, in order to avoid the problem of the signalling peak traffic (or increased signalling in general) on the user plane, upon an IP-CAN session establishment or modification, instead of indicating only the current / single QoS profile towards the UE, the gateway (GW) may indicate several QoS profile (or QoS parameter) and condition pairs, each QoS profile (or parameter) being valid when the corresponding condition (parameter) is valid/prevailing. The GW may also indicate which of the conditions, if any, is valid at the moment. The condition may be e.g. time of day or a period of time, or an event of any kind that can be recognized locally or though a received indication by the UE and access network when it occurs.

Upon detecting the activation or deactivation or change of a condition, the UE, access network, and/or PCEF/GW may then take relevant policy control actions by enforcing the QoS profile that corresponds to the new valid condition, i.e. without any need to exchange a flush of user session related messages between the GW and all related UEs.

According to some embodiments of the invention, there may be general conditions or events that cannot be recognized by the UE or access network but can be recognized by the GW (or access network for the UE), e.g. through an indication from the OCS via the PCEF/GW. In such a case the GW (or access network) can indicate the change of the condition to the access network /UE with a single, general (i.e. non-user-session-specific) message to avoid a flush of user session related messages through the user plane.

Furthermore, according to some embodiments of the invention, when a UE attaches to the network and an IP-CAN session is established, the UE may indicate its capability to support the signalling of several QoS profiles and related conditions. Similarly, the access network (e.g. radio access network) may add its own capability indication in the initial message exchange. The capability indications may be included in the response messages to let every involved entity be aware of every other involved entity supporting the feature. Several pairs of policy rules and conditions are provided to a UE or network element only, if a corresponding capability indication is received by the network element directly upstream in the chain from OCS to UE. Thus, backward compatibility for legacy UEs and access network elements may be ensured. According to some embodiments, corresponding capability indications may be provided upstream by PCEF and/or PCRF towards the OCS.

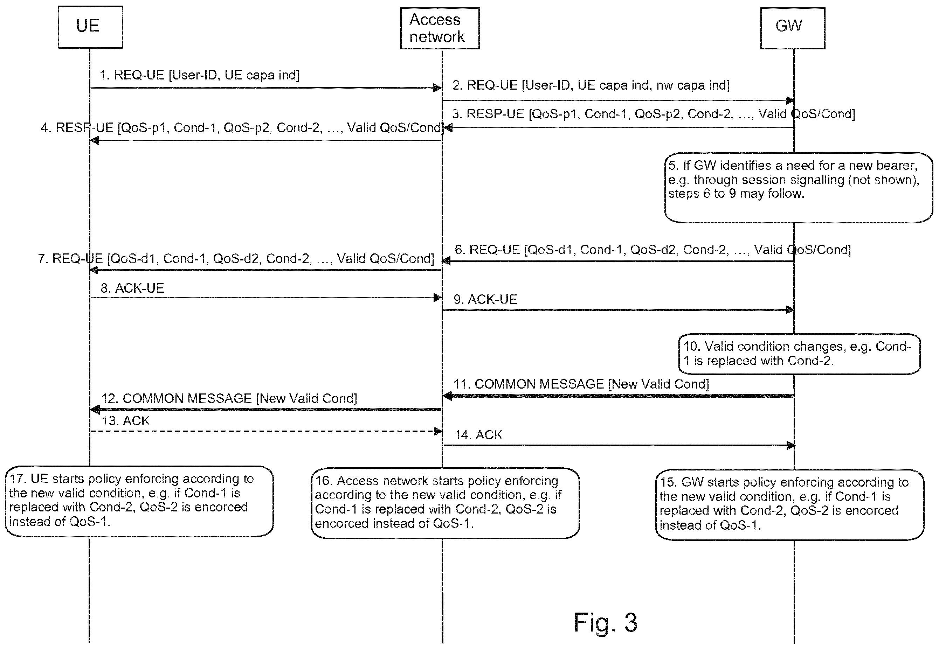

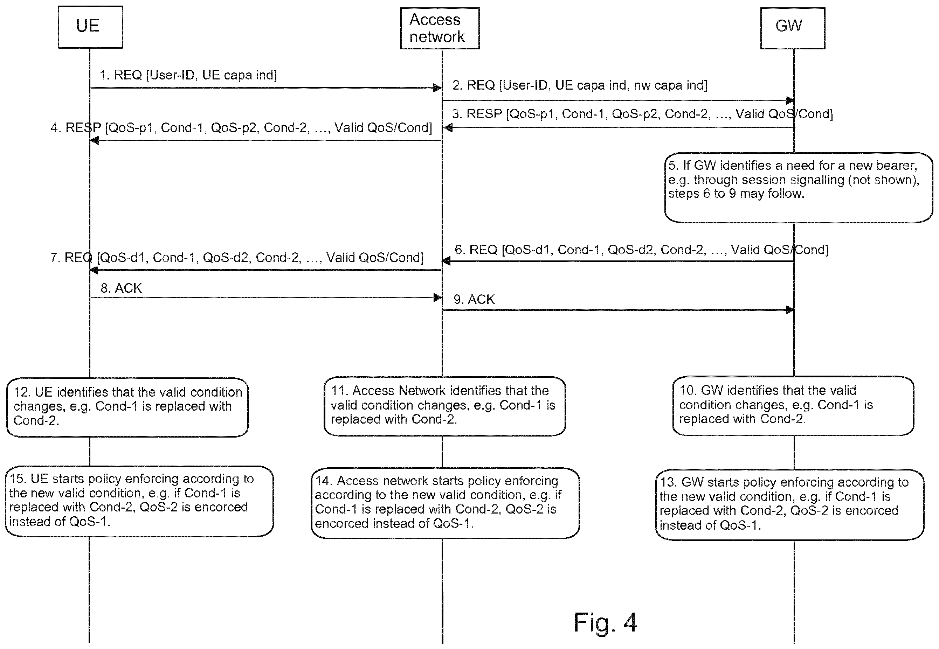

Steps 1 - 9 in figures 3 and 4 describe the capability indication upon the IP-CAN session establishment according to some embodiments of the invention, and an optional further (dedicated) bearer establishment. Note that the GW of Figs. 3 and 4 may correspond to the P-GW/PCEF of Figs. 1 and 2, i.e. the P-GW comprising the PCEF.

According to embodiments of the invention, there are two different ways for the UE and access network to detect the activation or deactivation of a condition without a user session specific message flush in the access network, as shown in the exemplary message flows of Figs. 3 and 4:
As shown in Figure 3, the GW may indicate the condition information (e.g. condition-1 replaced with condition-2) with a common / non-user-session-specific message between the GW and an access network element (e.g. a GTP tunnel message between a P-GW and radio access network element). The access network may then use an access specific common message, e.g. a broadcast or multicast message, to send the condition information to the UEs.

As shown in Figure 4, the UE and access network may locally detect the change of condition. An example of such a locally detectable condition is the time of day. The condition parameters signalled upon the IP-CAN session establishment or modifications just need to indicate the times / time periods, or in general the different conditions, for each QoS profile. (In the case of figure 4, it is preferred that the response messages 3 and 4 carry the capability indication parameters, too, to let every involved entity be aware of every other involved entity supporting the feature).

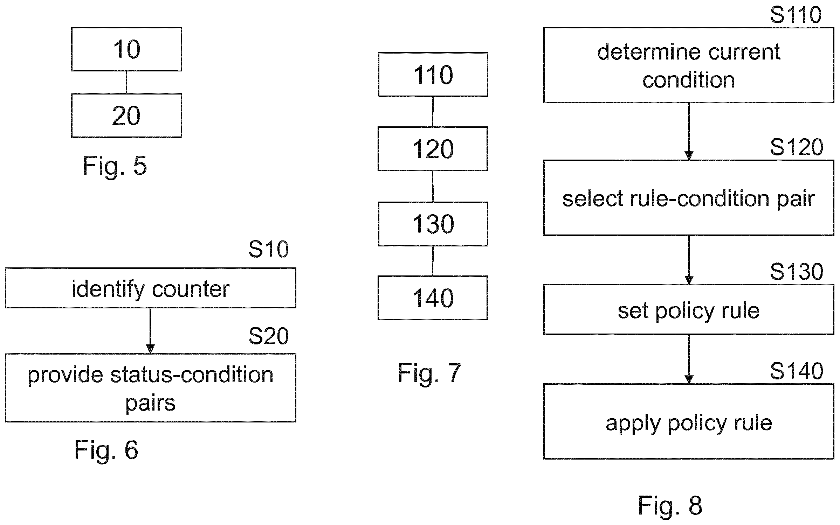

Fig. 5 shows an apparatus according to an embodiment of the invention. The apparatus may be an online charging system. The apparatus according to Fig. 5 may perform the method of Fig. 6 but is not limited to this method. The method of Fig. 6 may be performed by the apparatus of Fig. 5 but is not limited to being performed by this apparatus.

The apparatus comprises identifying means 10, and pair providing means 20.

The identifying means 10 identifies a counter (in general: a policy controlled object) related to a user based on a received request message from a policy and charging rules function (S10).

The pair providing means 20 provide, in a response message to the policy and charging rules function, a first status-condition pair and a second status-condition pair of the counter, wherein each of the first and second status-condition pairs comprises a respective status of the counter and a corresponding condition when the respective status is to be applied (S20). Typically, the first status condition pair is different from the second status-condition pair.

Fig. 7 shows an apparatus according to an embodiment of the invention. The apparatus may be one of a PCRF, PCEF, P-GW, access network, and a user equipment. The apparatus according to Fig. 7 may perform the method of Fig. 8 but is not limited to this method. The method of Fig. 8 may be performed by the apparatus of Fig. 7 but is not limited to being performed by this apparatus.

The apparatus comprises condition determining means 110, selecting means 120, rule setting means 130, and rule applying means 140.

The condition determining means 110 determines a currently valid condition (S110), e.g. a time of the day or receipt of a message indicating the currently valid condition.

The selecting means 120 selects a rule-condition pair for a counter (in general: for a policy controlled object) of a user based on the currently valid condition as determined by the condition determining means 110 (S120). The rule condition pairs our of which the selecting means 120 selects are comprised in a received message, wherein each rule-condition pair comprises a respective policy rule for the counter of the user and a corresponding condition when the respective policy rule is to be applied. Typically, there are different rule-condition pairs in the message.

The rule setting means 130 sets the policy rule according to the rule-condition pair for the counter of the user selected by the selecting means 120 (S130).

The rule applying means 140 applies the set policy rule related to the counter of the user (S140).

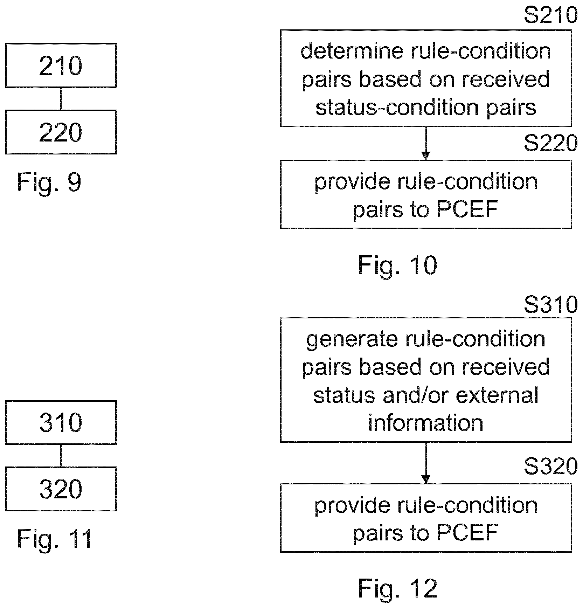

Fig. 9 shows an apparatus according to an embodiment of the invention. The apparatus may be a policy and charging rules function. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises policy rules determining means 210 and pair providing means 220.

The policy rules determining means 210 determines plural rule-condition pairs for a counter (in general: for a policy controlled object) related to a user (S210). The rule-condition pairs are determined based on corresponding status-condition pairs of the counter comprised in a received message. Each of the first and second rule-condition pairs comprises a respective policy rule and a corresponding condition when the respective policy rule is to be applied. Typically, the first status-condition pair is different from the second status-condition pair.

The pair providing means 220 provides the rule condition pairs to a policy and charging enforcement function (S220)

Fig. 11 shows an apparatus according to an embodiment of the invention. The apparatus may be a policy and charging rules function. The apparatus according to Fig. 11 may perform the method of Fig. 12 but is not limited to this method. The method of Fig. 12 may be performed by the apparatus of Fig. 11 but is not limited to being performed by this apparatus.

The apparatus comprises rule-condition pair generating means 310 and pair providing means 320.

The rule-condition pair generating means 310 determines a first rule-condition pair and a second rule-condition pair for a policy controlled object related to a user (S310). Each of the first and second rule-condition pairs comprises a respective policy rule and a corresponding condition when the respective policy rule is to be applied. The first rule-condition pair and the second rule-condition pair are determined based on a status information of the policy controlled object comprised in a message received from an online charging device and in addition, or alternatively, based on an information received from another device different from the online charging device. The other device may be a subscription profile repository (SPR). The online charging device and the other device may be external from the apparatus or integrated with the apparatus. The information from the other device may comprise e.g. a policy counter or usage monitoring control information or user plane event reporting control information. Neither the status information nor the information from the other device may comprise rule-condition pairs. According to this embodiment, the rule-condition pairs are generated by the rule-condition pair generating means 310. The rule in each of the rule-condition pairs may comprise e.g. one or more usage reporting thresholds or triggers for user plane event reporting (e.g. which event to report under which condition). Typically, the first rule-condition pair is different from the second rule-condition pair.

The pair providing means 320 provides the rule-condition pairs to a policy and charging enforcement function (S320)

Embodiments of the invention are described with respect to a counter to which a policy is applied. However, the invention is not restricted to counters. Some embodiments of the invention may be applied to any other object to which a policy may be applied, such as a flag, a piece of information etc.

Embodiments of the invention are described with respect to an IMS network. However, embodiments of the invention may be applied to other networks where policy control is applied.

A user equipment may be any terminal such as a mobile phone, a smart phone, a computer, a laptop, a personal digital assistant etc..

An access network may be a wireless network such as a GSM, GPRS, UMTS, LTE, WLAN, WiFi network, or a wired network such as LAN, WAN, PSTN, ATM network.

If not otherwise stated or otherwise made clear from the context, the statement that two entities are different means that they are differently addressed in their respective network. It does not necessarily mean that they are based on different hardware. That is, each of the entities described in the present description may be based on a different hardware, or some or all of the entities may be based on the same hardware.

According to the above description, it should thus be apparent that exemplary embodiments of the present invention provide, for example a charging apparatus such as an OCS, or a component thereof, an apparatus embodying the same, a method for controlling and/or operating the same, and computer program(s) controlling and/or operating the same as well as mediums carrying such computer program(s) and forming computer program product(s). Furthermore, it should thus be apparent that exemplary embodiments of the present invention provide, for example a policy rule apparatus such as a PCRF, or a component thereof, an apparatus embodying the same, a method for controlling and/or operating the same, and computer program(s) controlling and/or operating the same as well as mediums carrying such computer program(s) and forming computer program product(s). Furthermore, it should thus be apparent that exemplary embodiments of the present invention provide, for example a policy rule enforcement apparatus such as a PCEF, or a component thereof, an apparatus embodying the same, a method for controlling and/or operating the same, and computer program(s) controlling and/or operating the same as well as mediums carrying such computer program(s) and forming computer program product(s). Furthermore, it should thus be apparent that exemplary embodiments of the present invention provide, for example a access apparatus such as an access network, or a component thereof, an apparatus embodying the same, a method for controlling and/or operating the same, and computer program(s) controlling and/or operating the same as well as mediums carrying such computer program(s) and forming computer program product(s). Still furthermore, it should thus be apparent that exemplary embodiments of the present invention provide, for example a terminal such as a user equipment, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus, comprising
identifying means adapted to identify, based on a request message sent by a policy and charging rules function upon an IP-CAN session establishment or modification and received from said policy and charging rules function via an interface between said apparatus and said policy and charging rules function, a policy controlled counter related to a user of a network where policy control is applied, wherein said request message includes a user ID of said user and a counter ID of said policy controlled counter; and
pair providing means adapted to provide, in a response message to the policy and charging rules function via said interface, a plurality of status-time pairs of the policy controlled counter, wherein each status-time pair of the plurality of status-time pairs comprises a respective status of the policy controlled counter and a corresponding time when the respective status is to be applied.

2. The apparatus according to claim 1, wherein the response message additionally comprises an indication of the currently valid status.

3. Apparatus, comprising
time determining means adapted to determine a current time;
selecting means adapted to select a rule-time pair for a policy controlled counter of a user of a network where policy control is applied, based on the current time and a response message sent by an online charging system in response to a request message sent by said apparatus upon an IP-CAN session establishment or modification, wherein said request message includes a user ID of said user and a counter ID of said policy controlled counter, and wherein the response message being received via an interface between said apparatus and said online charging system and comprising a plurality of rule-time pairs for the user, and wherein each rule-time pair of the plurality of rule-time pairs comprises a respective policy rule and a corresponding time when the respective policy rule is to be applied;
rule setting means adapted to set the policy rule comprised in the selected rule-time pair for the policy controlled counter of the user; and
rule applying means adapted to apply the set policy rule to the policy controlled counter of the user.

4. The apparatus according to claim 3, further comprising
rule providing means adapted to provide the policy rule comprised in the selected rule-time pair to a second other device.

5. The apparatus according to any of claims 3 and 4, further comprising
capability indicating means adapted to indicate a capability of the apparatus to select a rule-time pair from the received message.

6. User equipment, comprising
an apparatus according to any of claims 3 to 5, and
user equipment means adapted to provide a user equipment function for the user to a network comprising a policy and charging enforcement function.

7. Method for controlling and/or operating an apparatus including identifying means and pair providing means, the method comprising
identifying, by said identifying means, based on a request message sent by a policy and charging rules function upon an IP-CAN session establishment or modification and received from said policy and charging rules function via an interface between said apparatus and said policy and charging rules function, a policy controlled counter related to a user of a network where policy control is applied, wherein said request message includes a user ID of said user and a counter ID of said policy controlled counter; and
providing, by said pair providing means, in a response message to the policy and charging rules function via said interface, a plurality of status-time pairs of the policy controlled counter, wherein each status-time pair of the plurality of status-time pairs comprises a respective status of the policy controlled counter and a corresponding time when the respective status is to be applied.

8. The method according to claim 7, wherein the response message additionally comprises an indication of the currently valid status.

9. Method for controlling and/or operating an apparatus including time determining means, selecting means, rule setting means, and rule applying means, the method comprising
determining, by said time determining means, a current time;
selecting, by said selecting means, a rule-time pair for a policy controlled counter of a user based on the current time and a response message sent by an online charging system in response to a request message sent by said apparatus upon an IP-CAN session establishment or modification, wherein said request message includes a user ID of said user and a counter ID of said policy controlled counter, and wherein the response message being received via an interface between said apparatus and said online charging system and comprising a plurality of rule-time pairs for the user, and wherein each rule-time pair of the plurality of rule-time pairs comprises a respective policy rule and a corresponding time when the respective policy rule is to be applied;
setting, by said rule setting means, the policy rule comprised in the selected rule-time pair for the policy controlled counter of the user; and
applying, by said rule applying means, the set policy rule to the policy controlled counter of the user.

10. The method according to claim 9, further comprising
providing the policy rule comprised in the selected rule-time pair to a second other device.

## Patentansprüche

1. Einrichtung, die Folgendes umfasst
Identifikationsmittel, die angepasst sind, auf Basis einer Anforderungsnachricht, die nach dem Aufbau oder der Modifikation einer IP-CAN-Sitzung von einer Richtlinien- und Abrechnungsregelfunktion gesendet und von der Richtlinien- und Abrechnungsregelfunktion via eine Schnittstelle zwischen der Einrichtung und der Richtlinien- und Abrechnungsregelfunktion empfangen wurde, einen richtliniengesteuerten Zähler zu identifizieren, der mit einem Benutzer eines Netzwerks, in dem eine Richtliniensteuerung angewendet wird, verknüpft ist, wobei die Anforderungsnachricht eine Benutzer-ID des Benutzers und eine Zähler-ID des richtliniengesteuerten Zählers beinhaltet; und
Paarbereitstellungsmittel, die angepasst sind, in einer Antwortnachricht an die Richtlinien- und Abrechnungsregelfunktion via die Schnittstelle eine Vielzahl von Status-Zeit-Paaren des richtliniengesteuerten Zählers bereitzustellen, wobei jedes Status-Zeit-Paar der Vielzahl von Status-Zeit-Paaren einen jeweiligen Status des richtliniengesteuerten Zählers und eine entsprechende Zeit, zu der der jeweilige Status anzuwenden ist, umfasst.

2. Einrichtung nach Anspruch 1, wobei die Antwortnachricht zusätzlich eine Anzeige des derzeit gültigen Status umfasst.

3. Einrichtung, die Folgendes umfasst
Zeitbestimmungsmittel, die angepasst sind, eine aktuelle Zeit zu bestimmen;
Auswahlmittel, die angepasst sind, auf Basis der aktuellen Zeit und einer Antwortnachricht, die in Reaktion auf eine Anforderungsnachricht, die von der Einrichtung nach dem Aufbau oder der Modifikation einer IP-CAN-Sitzung gesendet wurde, von einem Onlineabrechnungssystem gesendet wurde, ein Regel-Zeit-Paar für einen richtliniengesteuerten Zähler eines Benutzers eines Netzwerks, in dem eine Richtliniensteuerung angewendet wird, auszuwählen, wobei die Anforderungsnachricht eine Benutzer-ID des Benutzers und eine Zähler-ID des richtliniengesteuerten Zählers beinhaltet und wobei die Antwortnachricht via eine Schnittstelle zwischen der Einrichtung und dem Onlineabrechnungssystem empfangen wird und eine Vielzahl von Regel-Zeit-Paaren für den Benutzer umfasst und wobei jedes Regel-Zeit-Paar der Vielzahl von Regel-Zeit-Paaren eine jeweilige Richtlinienregel und eine entsprechende Zeit, zu der die jeweilige Richtlinienregel anzuwenden ist, umfasst;
Regeleinstellmittel, die angepasst sind, die Richtlinienregel, die im ausgewählten Regel-Zeit-Paar umfasst ist, für den richtliniengesteuerten Zähler des Benutzers einzustellen; und
Regelanwendungsmittel, die angepasst sind, die eingestellte Richtlinienregel auf den richtliniengesteuerten Zähler des Benutzers anzuwenden.

4. Einrichtung nach Anspruch 3, die ferner Folgendes umfasst
Regelbereitstellungsmittel, die angepasst sind, die Richtlinienregel, die im ausgewählten Regel-Zeit-Paar umfasst ist, einer zweiten anderen Vorrichtung bereitzustellen.

5. Einrichtung nach einem der Ansprüche 3 und 4, die ferner Folgendes umfasst
Fähigkeitsanzeigemittel, die angepasst sind, eine Fähigkeit der Einrichtung zum Auswählen eines Regel-Zeit-Paares aus der empfangenen Nachricht auszuwählen, anzuzeigen.

6. Teilnehmereinrichtung, die Folgendes umfasst
eine Einrichtung nach einem der Ansprüche 3 bis 5 und
Teilnehmereinrichtungsmittel, die angepasst sind, einem Netzwerk, das eine Richtlinien- und Abrechnungsdurchsetzungsfunktion umfasst, eine Teilnehmereinrichtungsfunktion für den Benutzer bereitzustellen.

7. Verfahren zum Steuern und/oder Betreiben einer Einrichtung, die Identifikationsmittel und Paarbereitstellungsmittel beinhaltet, wobei das Verfahren Folgendes umfasst
Identifizieren eines richtliniengesteuerten Zählers, der mit einem Benutzer eines Netzwerks, in dem eine Richtliniensteuerung angewendet wird, verknüpft ist, auf Basis einer Anforderungsnachricht, die nach dem Aufbau oder der Modifikation einer IP-CAN-Sitzung von einer Richtlinien- und Abrechnungsregelfunktion gesendet und von der Richtlinien- und Abrechnungsregelfunktion via eine Schnittstelle zwischen der Einrichtung und der Richtlinien- und Abrechnungsregelfunktion empfangen wurde, durch die Identifikationsmittel, wobei die Anforderungsnachricht eine Benutzer-ID des Benutzers und eine Zähler-ID des richtliniengesteuerten Zählers beinhaltet; und
Bereitstellen einer Vielzahl von Status-Zeit-Paaren in einer Antwortnachricht an die Richtlinien- und Abrechnungsregelfunktion via die Schnittstelle des richtliniengesteuerten Zählers durch die Paarbereitstellungsmittel, wobei jedes Status-Zeit-Paar der Vielzahl von Status-Zeit-Paaren einen jeweiligen Status des richtliniengesteuerten Zählers und eine entsprechende Zeit, zu der der jeweilige Status anzuwenden ist, umfasst.

8. Verfahren nach Anspruch 7, wobei die Antwortnachricht zusätzlich eine Anzeige des derzeit gültigen Status umfasst.

9. Verfahren zum Steuern und/oder Betreiben einer Einrichtung, die Zeitbestimmungsmittel, Auswahlmittel, Regeleinstellmittel und Regelanwendungsmittel beinhaltet, wobei das Verfahren Folgendes umfasst
Bestimmen einer aktuellen Zeit durch die Zeitbestimmungsmittel;
Auswählen eines Regel-Zeit-Paares für einen richtliniengesteuerten Zähler eines Benutzers auf Basis der aktuellen Zeit und einer Antwortnachricht, die in Reaktion auf eine Anforderungsnachricht, die von der Einrichtung nach dem Aufbau oder der Modifikation einer IP-CAN-Sitzung gesendet wurde, von einem Onlineabrechnungssystem gesendet wurde, durch die Auswahlmittel, wobei die Anforderungsnachricht eine Benutzer-ID des Benutzers und eine Zähler-ID des richtliniengesteuerten Zählers beinhaltet und wobei die Antwortnachricht via eine Schnittstelle zwischen der Einrichtung und dem Onlineabrechnungssystem empfangen wird und eine Vielzahl von Regel-Zeit-Paaren für den Benutzer umfasst und wobei jedes Regel-Zeit-Paar der Vielzahl von Regel-Zeit-Paaren eine jeweilige Richtlinienregel und eine entsprechende Zeit, zu der die jeweilige Richtlinienregel anzuwenden ist, umfasst;
Einstellen der Richtlinienregel, die im ausgewählten Regel-Zeit-Paar umfasst ist, für den richtliniengesteuerten Zähler des Benutzers durch die Regeleinstellmittel und
Anwenden der eingestellten Richtlinienregel auf den richtliniengesteuerten Zähler des Benutzers durch die Regelanwendungsmittel.

10. Verfahren nach Anspruch 9, das ferner Folgendes umfasst
Bereitstellen der Richtlinienregel, die im ausgewählten Regel-Zeit-Paar umfasst ist, für eine zweite andere Vorrichtung.

## Revendications

1. Appareil, comprenant
des moyens d'identification adaptés pour identifier, sur la base d'un message de demande envoyé par une fonction de règles de politique et de facturation lors d'un établissement ou d'une modification de session de réseau d'accès à la connectivité de protocole Internet, IP-CAN, et reçu à partir de ladite fonction de règles de politique et de facturation via une interface entre ledit appareil et ladite fonction de règles de politique et de facturation, un compteur contrôlé de politique lié à un utilisateur d'un réseau où un contrôle de politique est appliqué, dans lequel ledit message de demande comporte un identifiant, ID, d'utilisateur dudit utilisateur et un ID de compteur dudit compteur contrôlé de politique ; et
des moyens de fourniture de paires adaptés pour fournir, dans un message de réponse à la fonction de règles de politique et de facturation via ladite interface, une pluralité de paires état-temps du compteur contrôlé de politique, dans lequel chaque paire état-temps de la pluralité de paires état-temps comprend un état respectif du compteur contrôlé de politique et un temps correspondant où l'état respectif doit être appliqué.

2. Appareil selon la revendication 1, dans lequel le message de réponse comprend également une indication de l'état actuellement valide.

3. Appareil, comprenant
des moyens de détermination de temps adaptés pour déterminer un temps actuel ;
des moyens de sélection adaptés pour sélectionner une paire règle-temps pour un compteur contrôlé de politique d'un utilisateur d'un réseau où un contrôle de politique est appliqué, sur la base du temps actuel et d'un message de réponse envoyé par un système de facturation en ligne en réponse à un message de demande envoyé par ledit appareil lors d'un établissement ou d'une modification de session IP-CAN, dans lequel ledit message de demande comporte un ID d'utilisateur dudit utilisateur et un ID de compteur dudit compteur contrôlé de politique, et dans lequel le message de réponse est reçu via une interface entre ledit appareil et ledit système de facturation en ligne et comprend une pluralité de paires règle-temps pour l'utilisateur, et dans lequel chaque paire règle-temps de la pluralité de paires règle-temps comprend une règle de politique respective et un temps correspondant où la règle de politique respective doit être appliquée ;
des moyens de définition de règle adaptés pour définir la règle de politique comprise dans la paire règle-temps sélectionnée pour le compteur contrôlé de politique de l'utilisateur ; et
des moyens d'application de règle adaptés pour appliquer la règle de politique définie au compteur contrôlé de politique de l'utilisateur.

4. Appareil selon la revendication 3, comprenant en outre
des moyens de fourniture de règle adaptés pour fournir la règle de politique comprise dans la paire règle-temps sélectionnée à un deuxième autre dispositif.

5. Appareil selon l'une quelconque des revendications 3 et 4, comprenant en outre
des moyens d'indication de capacité adaptés pour indiquer une capacité de l'appareil à sélectionner une paire règle-temps à partir du message reçu.

6. Équipement d'utilisateur, comprenant
un appareil selon l'une quelconque des revendications 3 à 5, et
des moyens d'équipement d'utilisateur adaptés pour fournir une fonction d'équipement d'utilisateur pour l'utilisateur à un réseau comprenant une fonction de mise en œuvre de politique et de facturation.

7. Procédé de contrôle et/ou d'exploitation d'un appareil comportant des moyens d'identification et des moyens de fourniture de paires, le procédé comprenant
l'identification, par lesdits moyens d'identification, sur la base d'un message de demande envoyé par une fonction de règles de politique et de facturation lors de l'établissement ou de la modification d'une session IP-CAN et reçu à partir de ladite fonction de règles de politique et de facturation via une interface entre ledit appareil et ladite politique et une fonction de règles de facturation, d'un compteur contrôlé de politique lié à un utilisateur d'un réseau où un contrôle de politique est appliqué, dans lequel ledit message de demande comporte un ID d'utilisateur dudit utilisateur et un ID de compteur dudit compteur contrôlé de politique ; et
la fourniture, par lesdits moyens de fourniture de paires, dans un message de réponse à la fonction de règles de politique et de facturation via ladite interface, une pluralité de paires état-temps du compteur contrôlé de politique, dans lequel chaque paire état-temps de la pluralité de paires état-temps comprend un état respectif du compteur contrôlé de politique et un temps correspondant où l'état respectif doit être appliqué.

8. Le procédé selon la revendication 7, dans lequel le message de réponse comprend également une indication de l'état actuellement valide.

9. Procédé de contrôle et/ou d'exploitation d'un appareil comportant des moyens de détermination de temps, des moyens de sélection, des moyens de définition de règle, et des moyens d'application de règle, le procédé comprenant
la détermination, par lesdits moyens de détermination de temps, d'un temps actuel ;
la sélection, par lesdits moyens de sélection, d'une paire règle-temps pour un compteur contrôlé de politique d'un utilisateur sur la base du temps actuel et d'un message de réponse envoyé par un système de facturation en ligne en réponse à un message de demande envoyé par ledit appareil lors de l'établissement ou de la modification d'une session IP-CAN, dans lequel ledit message de demande comporte un ID d'utilisateur dudit utilisateur et un ID de compteur dudit compteur contrôlé de politique, et dans lequel le message de réponse est reçu via une interface entre ledit appareil et ledit système de facturation en ligne et comprend une pluralité de paires règle-temps pour l'utilisateur, et dans lequel chaque paire règle-temps de la pluralité de paires règle-temps comprend une règle de politique respective et un temps correspondant où la règle de politique respective doit être appliquée ;
la définition, par lesdits moyens de définition de règle, de la règle de politique comprise dans la paire règle-temps sélectionnée pour le compteur contrôlé de politique de l'utilisateur ; et
l'application, par lesdits moyens d'application de règle, de la règle de politique définie au compteur contrôlé de politique de l'utilisateur.

10. Le procédé selon la revendication 9, comprenant en outre
la fourniture de la règle de politique comprise dans la paire règle-temps sélectionnée à un deuxième autre dispositif.
